# EUROPEAN PATENT SPECIFICATION

(11) **EP 0 496 161 B1**
(45) Date of publication and mention of the grant of the patent: **15.02.1995**
(21) Application number: 91311622.4
(22) Date of filing: 13.12.1991
(51) Int. Cl.: G21C 3/334

(54) **Key for inserting fuel rods in exterior grid cells and method for using such a key**
Schlüssel zum Einsetzen von Kernbrennstäben in die Aussenzellen von Abstandshaltern und Methode zur Benützung eines solchen Schlüssels
Clé pour l'insertion de crayons de combustible nucleaire dans les cellules extérieures de grilles d'espacement et methode de mise en oeuvre d'une telle clé

(30) Priority: 24.01.1991 US 645156
(43) Date of publication of application: 29.07.1992
(73) Proprietor: B&W FUEL COMPANY, Lynchburg, Virginia (US)
(72) Inventor: Whitt, Jeffrey Scott, Lynchburg, VA 24502 (US)
(74) Representative: Purvis, William Michael Cameron

(56) References cited:
- EP-A- 0 196 609
- US-A- 3 862 884
- US-A- 3 892 027
- US-A- 3 933 583
- PATENT ABSTRACTS OF JAPAN vol. 14, no. 452 (P-1112)(4395) 27 September 1990; &JP-A-2 181 699
- SOVIET INVENTIONS ILLUSTRATED, week 8645, 20 november 1986. Derwent Publications Ltd., London GB.; & SU-A-1217734

## Description

The invention relates generally to nuclear fuel assemblies and, in particular to a tool for and method of loading fuel rod into exterior grid cells of a fuel assembly.

Grids used in commercial nuclear fuel assemblies are fabricated with stops that grip fuel rods in place when the fuel assembly is in the as-built condition. During fuel assembly fabrication the stops are withdrawn away from the centerline of each grid cell to allow free passage of the fuel rod into and through the grid. Keying of the stops to cause them to withdraw from the centreline of their grids is typically performed using a rectangular wire that is inserted into and through the windows of the grid as illustrated for example in JP-A- 02 181 699 /90. The wire key extends through the full with of the grid and is rotated so that the thickest cross-section of the key wedges the strip section backward and thus withdraws the stop. The key is machined with cutouts to preclude interference with the fuel rods when in the rotated position. On some grid designs the rectangular wire key cannot be used to withdraw the stops located on the exterior grid strip. This restriction is typically caused by a grid corner design that does not allow for adequate passage of the rectangular wire through the corner window. In these cases, an alternate key design or fabrication process is required. A known design uses a machined bar with small keys attached to it by the use of snap rings. The bar seats on the outside surfaces of the grid and the keys (two turned diameters with flats milled on the larger diameter 180 degrees apart) are lined up with the grid window openings. Another fixture is then used to spring the grid strips to an open position and the keys are rotated to catch under the exterior grid strip edges.

Previous proposals related to nuclear fuel assemblies and the loading of fuel rods include:
Patent Specification US-A-3 933 583 which discloses a grid structure having elongate slots intermediate and normal to the longitudinal edges of each of the strips at each intersection of the strips whereby the slots form openings in each corner of each passageway;
EP-A-0 196 609 corresponding to patent Specification US-A-4 651 403, discloses the use of a plurality of elongate corner posts that extend longitudinally between and rigidly interconnect top and bottom nozzles to form a rigid structural skeleton of the fuel assembly;
Patent Specification US-A-4 489 037 which discloses an automatic channel box fitting position adjusting apparatus to facilitate positional adjustment of a channel box for fitting onto a nuclear fuel assembly;
Patent Specification US-A-4 747 997 which discloses a nuclear fuel rod loader for pulling fuel rods into a fuel assembly skeleton that has a rod gripper with slots defining fingers;
Patent Specifications US-A- 4 664 874, US-A-4 664 875, and US-A-4 667 547 which disclose fixtures relating to the insertion and removal of top nozzles; and
Specification US-A-4 800 061 which discloses the use of a thin-walled tubular member that envelopes a fuel rod during insertion and is then removed after the fuel rod is inserted into the grid.

Such previous proposals do not address the specific problem of loading fuel rods in exterior grid cells. Therefore, a need exists for a method and tool that can simplify the loading of fuel rods in exterior grid cells.

According to another aspect of the invention there is provided a grid key for keying exterior grid cells in a nuclear fuel assembly comprising:
a. a main body portion having first and second ends, the main body portion being bent at approximately a 45 degree angle near the first end; and
b. two tabs that extend outward in opposite directions from the first end at a right angle to the main body portion to define a T-shape at the first end, wherein the width across both of the tabs is approximately 6.7mm (0.265 inches) and the thickness of the tabs is greater than their length.

According to a further aspect of the invention there is provided a method for keying exterior grid cells in a nuclear fuel assembly having grid assemblies formed from interleaved grid strips with the grid assemblies forming interior and exterior grid cells, comprising:
a. inserting a grid key having a T-shaped first end and a main body portion bent at approximately a 45 degree angle into the window of the exterior grid strip of the exterior grid cell such that the top of the T-shaped first end is inside the window and parallel to the longitudinal axis of the grid assembly;
b. rotating the main body portion of the grid key approximately 90 degrees such that the top of the T-shaped first end is perpendicular to the longitudinal axis of the grid assembly and behind the exterior grid strip;
c. pulling the main body portion away from the exterior grid strip in a vertical rotating motion to move it approximately 90 degrees to a vertical position whereby the top of the T-shaped first end pulls the exterior grid strip away from the centre of its cell defined by the grid assembly.

Such a tool for loading fuel rods in exterior grid cells can be fabricated in batch processing, can be relatively inexpensive to fabricate, requires no assembly and contains no relatively moving parts. Each one of the keys works independently in each grid window and is placed in an open window of the exterior grid. The key is then rotated 90 degrees in the window so as to be perpendicular to the interior strip that it rests upon. The key is then pulled forward in a motion that causes a wider portion of the key to lift the exterior grid strip section that it comes in contact with.

The invention is diagrammatically illustrated by way of example in the accompanying drawings, in which:-
Figure 1 is a plan view of a grid key for keying exterior grid cells according to the invention;
Figure 2 is a side view corresponding to Figure 1;
Figure 3 is a perspective view corresponding to Figure 1;
Figure 4 is a front view illustrating operation of the grid key of Figure 1 with an exterior grid strip;
Figure 5 is a side view illustrating the grid key of Figure 1 inserted in an exterior grid strip before lifting the exterior grid strip; and
Figure 6 is a side view illustrating the operating position of the grid key of Figure 1 in lifting the exterior grid strip.

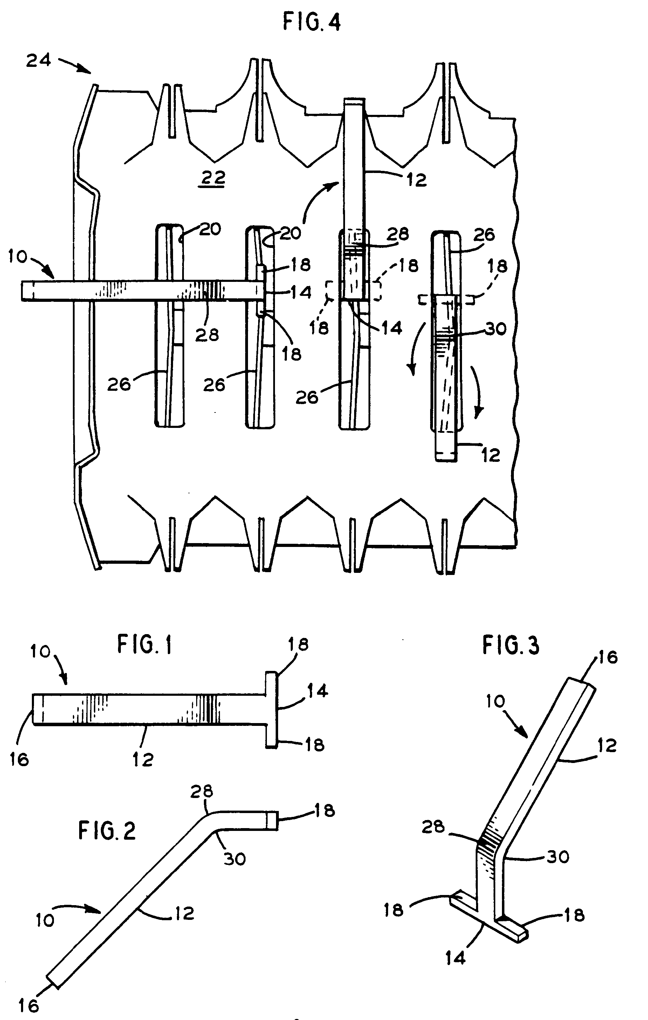

Referring to the drawings, it can be seen in Figures 1 to 3 that a grid key 10 is formed in the shape of a rectangular bar to provide a main body portion 12 having first and second ends 14, 16. The body portion 12 is bent near the first end 14 to form a 45 degree angle in the main body portion 12. In the preferred embodiment the bend in the main body portion 12 is approximately 4.8mm (0.19 inches) from the first end 14 and has a bend radius of approximately 2.3mm (0.09 inches).

The first end 14 is provided with two rectangular extensions or tabs 18 that extend outwardly in opposite directions from the first end 14 at a right angle to the main body portion 12 to define a T-shape at the first end 14. In the preferred embodiment the tabs 18 are integral with the main body portion 12 for ease of fabrication and strength. The following terms will be used for the sake of clarity in referring to the various dimensions of the tabs 18 and the main body portion 12. The dimension of the tabs 18 in the direction from the first ends 14 back toward the bend in the main body portion 12 shall be indicated as the length of the tabs 18. The dimension across both of the tabs 18 shall be indicated as the width across the tabs 18 with the corresponding dimension across the main body portion 12 being indicated as the width of main body portion 12. The thickness of the tabs 18 and the main body portion 12 is that dimension perpendicular to the width.

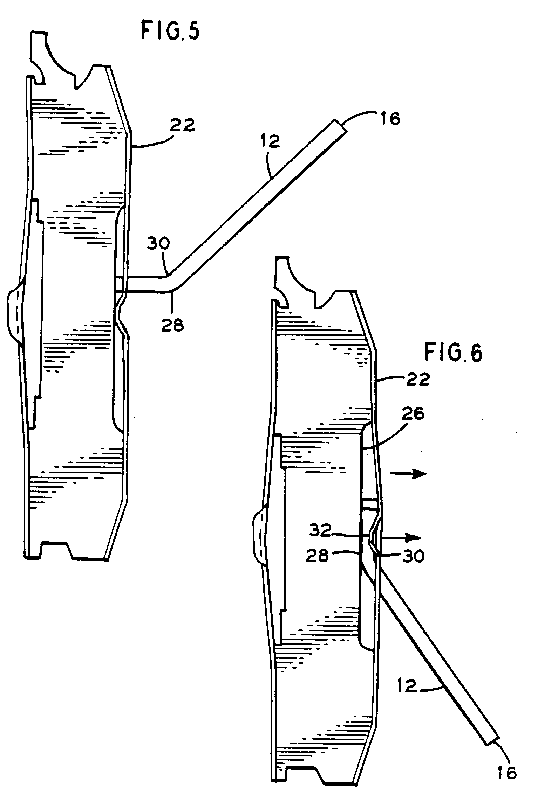

During loading of fuel rods into exterior grid cells of a fuel assembly, the grid key 10 is used in the following manner. As shown in Figure 4, the first end 14 is inserted into a window 20 of an exterior grid strip 22. In this first position the tabs 18 are parallel to the longitudinal axis of a grid assembly 24, the exterior grid strip 22, and an interior grid strip 26. Each grid assembly 24 used in a nuclear fuel assembly to position fuel rods radially relative to each other is formed from a plurality of grid strips interleaved together to form cells between the strips that receive the fuel rods. The main body portion 12 is positioned such that the outside radius of the bend in the main body portion 12, designated by the numeral 28, faces away from the exterior grid strip 22 and the inside radius of the bend, designated by the numeral 30, faces towards the exterior grid strip 24. The main body portion 12 is then rotated through 90 degrees to a position in which the main body portion 12 is parallel with the longitudinal axis of the grid assembly 24, the tabs 18 are perpendicular to the longitudinal axis of the grid assembly 24, and the first end 14 is resting on the edge of the interior grid strip 26. In this position, the tabs 18 extend beyond the edge of the window 20. The main body portion 12 is then pulled away from the exterior grid strip 22 and moved through approximately 90 degrees in a vertical rotating motion. As can be seen in Figures 5 and 6, this causes the outside radius 28 to bear against the interior grid strip 26 and the tabs 18 to pull the exterior grid strip 22 outwardly as the main body portion 12 is moved. As the main body portion 12 is moved, this causes rotation of the tabs 18 from their first position where their length is between the exterior grid strip 22 and the interior grid strip 26 to a second position where the thickness of the tabs 18 is between the exterior grid strip 22 and the interior grid strip 26. Since the thickness of the tabs 18 is greater than their length, there is a camming effect causing keying or lifting of the exterior grid strip 22. A dimple 32 on the interior side of the exterior grid strip 22 is thus moved away from the cell and a fuel rod may then be inserted into the cell without the dimple 32 scratching the fuel rod. After a fuel rod has been inserted, the grid key 10 is removed by reversing the movements thereof effected to allow insertion of the fuel rod. For ease of illustration only a portion of the grid assembly 24 is shown. The grid key 10 may be formed from any suitable material such as 17-4ph stainless steel or nylon or other plastics that are strong enough for such use and are easily produced by a moulding process. The length and thickness of the tabs 18 are adjusted according to the type of grid assembly and the space between the interior grid strip 26 and the exterior grid strip 22. As an example, in a zircalloy grid tested, the dimension of the tabs 18 from the first end 14 back toward the bend (the length of the tabs 18) was preferably 0.89mm (0.035 inches) whereas in an inconel grid the preferred dimension was 1.7mm (0.068 inches). The width of the main body portion 12 for such grids was 2.5mm (0.100 inches) and 4.6mm (0.180 inches) respectively while the thickness of the main body portion 12 and the tabs 18 was 1.5mm (0.059 inches) and 2.0mm (0.078 inches) respectively. The width across both of the tabs 18 for either type of grid was preferably 6.7mm (0.265 inches). The preferred length of the main body portion 12 from the bend to the second end was 19.1mm (0.75 inches).

## Claims

1. A grid key (10) for keying exterior grid cells in a nuclear fuel assembly, comprising:
a. a main body portion (12) having first (14) and second (16) ends, the main body portion (12) being bent at approximately a 45 degree angle near the first end (14); and
b. two tabs (18) that extend outward in opposite directions from the first end at right angles to the main body portion (12) to define a T-shape at the first end (14).

2. A grid key according to claim 1, wherein the thickness of the tabs (18) is greater than their length.

3. A grid key according to claim 1 or claim 2, wherein the main body portion (12) is bent approximately 4.8mm (0.19 inches) from the first end (14).

4. A grid key according to any one of claims 1 to 3, wherein the width across both of the tabs (18) is approximately 6.7mm (0.265 inches).

5. A grid key according to any one of claims 1 to 4, wherein the inside radius of the bend in the main body portion (12) is approximately 2.3mm (0.09 inches).

6. A method for keying exterior grid cells in a nuclear fuel assembly having grid assemblies formed from interleaved grid strips with the grid assemblies forming interior and exterior grid cells, comprising:
a. inserting a grid key (10) having a T-shaped first end (14) and a main body portion (12) bent at approximately a 45 degree angle into the window (20) of the exterior grid strip (22) of the exterior grid cell such that the top of the T-shaped first end (14) is inside the window (20) and parallel to the longitudinal axis of the grid assembly;
b. rotating the main body portion (12) of the grid key (10) approximately 90 degrees such that the top of the T-shaped first end (14) is perpendicular to the longitudinal axis of the grid assembly and behind the exterior grid strip (22);
c. pulling the main body portion away from the exterior grid strip (22) in a vertical rotating motion to move it approximately 90 degrees to a vertical position whereby the top of the T-shaped first end (14) pulls the exterior grid strip (22) away from the centre of its cell defined by the grid assembly.

## Patentansprüche

1. Abstandshalterschlüssel (10) zum Verkeilen äußerer Abstandshalterzellen in einer Kernbrennstoffanordnung mit
a) einem Hauptkörperbschnitt (12) mit einem ersten (14) und einem zweiten (16) Ende, wobei der Hauptkörperabschnitt (12) nahe dem ersten Ende (14) in einem Winkel von etwa 45° umgebogen ist, und
b) zwei Zungen (18), die sich in entgegengesetzten Richtungen von dem ersten Ende aus in rechten Winkeln zu dem Hauptkörperabschnitt (12) nach außen erstrecken, um eine T-Form an dem ersten Ende (14) zu ergeben.

2. Abstandshalterschlüssel nach Anspruch 1, bei dem die Dicke der Zungen (18) größer als ihre Länge ist.

3. Abstandshalterschlüssel nach Anspruch 1 oder Anspruch 2, bei dem der Hauptkörperabschnitt (12) etwa 4,8 mm (0,19 Inch) von dem ersten Ende (14) aus umgebogen ist.

4. Abstandshalterschlüssel nach einem der Ansprüche 1 bis 3, bei dem die Breite quer zu den beiden Zungen (18) etwa 6,7 mm (0,265 Inch) ist.

5. Abstandshalterschlüssel nach einem der Ansprüche 1 bis 4, bei dem der Innenradius der Biegung an dem Hauptkörperabschnitt (12) etwa 2,3 mm (0,09 Inch) ist.

6. Verfahren zur Verkeilung äußerer Abstandshalterzellen in einer Kernbrennstoffanordnung mit Abstandshalteranordnungen, die von überlappenden Abstandshalterstreifen gebildet sind, wobei die Abstandshalteranordnungen innere und äußere Abstandshalterzellen bilden, indem man
a) einen Abstandshalterschlüssel (10) mit einem T-förmigen ersten Ende (14) und einem Hauptkörperabschnitt (12), der in einem Winkel von etwa 45° umgebogen ist, in das Fenster (20) des äußeren Abstandshalterstreifens (22) der äußeren Abstandshalterzelle derart einsetzt, daß die Spitze des T-förmigen ersten Endes (14) in dem Fenster (20) und parallel zu der Längsachse der Abstandshalteranordnung ist,
b) den Hauptkörperabschnitt (12) des Abstandshalterschlüssels (10) um etwa 90° derart dreht, daß die Spitze des T-förmigen ersten Endes (14) senkrecht zu der Längsachse der Abstandshalteranordnung und hinter dem äußeren Abstandshalterstreifen (22) ist,
c) den Hauptkörperabschnitt von dem äußeren Abstandshalterstreifen (22) in einer vertikalen Drehbewegung wegzieht, um ihn um etwa 90° zu einer vertikalen Position zu bewegen, wobei die Spitze des T-förmigen ersten Endes (14) den äußeren Abstandshalterstreifen (22) von der Mitte seiner Zelle, die durch die Abstandshalteranordnung definiert ist, wegzieht.

## Revendications

1. Clé de grille (10) pour verrouiller les cellules extérieures de grille d'un module de combustible nucléaire, comprenant :
a. une partie corps principal (12) comportant des première (14) et seconde (16) extrémités, la partie corps principal (12) étant coudée suivant un angle d'environ 45 degrés près de la première extrémité (14) ; et,
b. deux pattes (18) qui s'étendent vers l'extérieur en sens contraires à partir de la première extrémité suivant un angle droit par rapport à la partie corps principal (12) pour définir une forme en T au droit de la première extrémité (14).

2. Clé de grille selon la revendication 1, dans laquelle l'épaisseur des pattes (18) est plus grande que leur longueur.

3. Clé de grille selon la revendication 1 ou la revendication 2, dans laquelle la partie corps principal (12) est coudée à environ 4,8 mm (0,19 pouce) de la première extrémité (14).

4. Clé de grille selon l'une quelconque des revendications 1 à 3, dans laquelle la largeur transversale des deux pattes (18) est d'environ 6,7 mm (0,265 pouce).

5. Clé de grille selon l'une quelconque des revendications 1 à 4, dans laquelle le rayon intérieur du coude de la partie corps principal (12) est d'environ 2,3 mm (0,09 pouce).

6. Procédé pour verrouiller les cellules extérieures de grille dans un module de combustible nucléaire comportant des modules de grille formés à partir de bandes de grille entrelacées, les modules de grille formant des cellules de grille intérieures et extérieures, comprenant :
a. l'introduction d'une clé de grille (10), ayant une première extrémité (14) en forme de T et une partie corps principal (12) coudée suivant un angle d'environ 45 degrés, dans la fenêtre (20) de la bande extérieure de grille (22) de la cellule extérieure de grille de telle façon que le sommet de la première extrémité (14) en forme de T soit à l'intérieur de la fenêtre (20) et parallèle à l'axe longitudinal du module de grille ;
b. la rotation de la partie corps principal (12) de la clé de grille (10) d'environ 90 degrés, de sorte que le sommet de la première extrémité (14) en forme de T soit perpendiculaire à l'axe longitudinal du module de grille et derrière la bande extérieure de grille (22) ;
c. l'écartement de la partie corps principal par rapport à la bande extérieure de grille (22) dans un mouvement de rotation verticale pour la déplacer d'environ 90 degrés jusqu'à une position verticale, ce par quoi le sommet de la première extrémité (14) en forme de T écarte la bande extérieure de grille (22) du centre de sa cellule définie par le module de grille.
